# EUROPEAN PATENT SPECIFICATION

(11) **EP 4 627 691 B1**
(45) Date of publication and mention of the grant of the patent: **14.10.2026**
(21) Application number: 22823550.3
(22) Date of filing: 01.12.2022
(51) Int. Cl.: B60L 3/00, B60L 53/63, B60L 53/67, B60L 53/68, H02J 7/92

(54) **A METHOD AND A CHARGING STATION FOR A VEHICLE**
VERFAHREN UND LADESTATION FÜR EIN FAHRZEUG
PROCÉDÉ ET STATION DE CHARGE POUR UN VÉHICULE

(43) Date of publication of application: 08.10.2025
(73) Proprietor: VOLVO TRUCK CORPORATION, 405 08 Göteborg (SE)
(72) Inventor: ESTRAGNAT, Emmanuel, 69110 Ste Foy Les Lyon (FR)
(74) Representative: Valea AB
(86) International application number: PCT/EP2022/084121
(87) International publication number: WO 2024/114916

(56) References cited:
- US-A1- 2019 275 893

## Description

### TECHNICAL FIELD

The disclosure relates generally to a computer system, a computer-implemented method, a control system, a charging station, a computer program product and a non-transitory computer-readable storage medium. In particular aspects, the disclosure relates to a charging infrastructure network for a vehicle. The disclosure can be applied in heavy-duty vehicles, such as trucks, buses, marine vessels and construction equipment. Although the disclosure may be described with respect to a particular vehicle, the disclosure is not restricted to any particular vehicle.

### BACKGROUND

Today's electrification of vehicles also includes their infrastructure. The infrastructure comprises different components, and charging stations is one example of such component. There are a number of aspects that are important for the charging stations, for example charging speed, charging time, lifetime, impact on the power grid, load balancing etc., and it is desirable to optimize the charging stations with respect to one or more of these aspects, in addition to other aspects. Thus, there is a strive to develop further improved technology relating to charging stations for vehicles. ->

US 2019/0275893 A1 discloses an intelligent charging network.

### SUMMARY

According to a first aspect of the disclosure, a computer system comprising a processor device is provided, as defined by the features of independent claim 1. The processor device is configured to:
- model an operating environment for at least one charging station, wherein the at least one charging station is comprised in a charging infrastructure network for a vehicle;
- model a current performance of the at least one charging station and at the modelled operating environment;
- model an expected performance of the at least one charging station and at the modelled operating environment and based on that the at least one charging station is provided with one or more add-on features;
- compare the current performance with the expected performance for the at least one charging station; and to
   - based on a result of the comparison, determine whether enabling the one or more add-on features improves a performance of the at least one charging station or not.

The first aspect of the disclosure may seek to enable improvement of charging stations for vehicles. A technical benefit may include that improvement of charging stations for vehicles is enabled. Improvement of the charging stations may be enabled by investigating their performance and thereby determine whether add-on features to the charging station would improve the performance. This may be done without the need to adding the actual add-on features to the charging station, but it may be done by modelling, e.g. using the concept of digital twins.

According to a second aspect of the disclosure, a computer-implemented method for a charging infrastructure network for a vehicle is provided, as defined by the features of the respective independent claim. The charging infrastructure network comprises at least one charging station. The method comprises:
- modelling, by a processor device of a computer system, an operating environment for the at least one charging station;
- modelling, by the processor device, a current performance of the at least one charging station and at the modelled operating environment;
- modelling, by the processor device, an expected performance of the at least one of the charging station and at the modelled operating environment and based on that the at least one charging station is provided with one or more add-on features;
- comparing, by the processor device, the current performance with the expected performance for the at least one charging station; and
- based on a result of the comparison, determining, by the processor device, whether enabling the one or more add-on features improves a performance of the at least one charging station or not.

Technical benefits of the second aspect are largely analogous to the technical benefits of the first aspect. Further, all examples of the first aspect are applicable to and combinable with all examples of the second aspect, and vice versa.

According to the invention, the method comprises:
- when the performance is determined to be improved, triggering, by the processor device, an update procedure of the at least one charging station, and may additionally comprise:
- providing update information relating to the update procedure of the at least one charging station, and
wherein the update procedure is associated with the one or more add-on features.

A technical benefit may include that update of the charging station may be performed automatically, with or without user input. After the update procedure has been completed, the charging station will be provided with additional features which may comprise a new feature of the charging station and/or an improvement of an existing feature. With the update information, a user or owner of the charging station and/or a user of the vehicle may monitor the update procedure in order to check if it proceeds correctly, to know when it will be completed etc.

In some examples, the performance may be determined to be improved when the result of the comparison indicates that the expected performance exceeds the current performance. The result is used as a trigger to provision, automatically or manually, one or more add-on features to the charging station and thus improve the performance of the charging station.

In some examples, the performance may be determined to not be improved when the result of the comparison indicates that the expected performance does not exceed or is the same as the current performance. A technical benefit may include that the result may be used as an indication, analyzed by the processor device and/or by a user, of that it may not be advantageous from a performance perspective to add one or more add-on features to the charging station since the performance of the charging station may probably not be sufficiently improved.

In some examples, the method may comprise:
- comparing, by the processor device, the current performance for a first charging station with the current performance of at least one second charging station; and
- when a result of the comparison indicates that the current performance of the first charging station is lower than the current performance of the at least one second charging station, determining, by the processor device, that the result is an indication of a failure or a need for maintenance of the first charging station.
A technical benefit may include that detection of failure or need for maintenance is easily detected. It may not be necessary for an operator to physically investigate the charging station in order to detect a failure or need for maintenance, which involves a reduced cost and a less complex procedure for detecting failure or need for maintenance.

In some examples, the method may comprise;
- providing, by the processor device, information about the indication of the failure or the need for maintenance to a central unit associated with the charging infrastructure network.
A technical benefit may include that detection of failure or need for maintenance is easily detected. It may not be necessary for an operator to physically investigate the charging station in order to detect a failure or need for maintenance, which involves a reduced cost and a less complex procedure for detecting failure or need for maintenance.

In some examples, the method may comprise:
- initiating, by the processor device, re-routing of a vehicle currently scheduled to charge at the first charging station to another charging station.
A technical benefit may include that, if a failure has been detected at the first charging station or if the first charging station is subject to maintenance, then the vehicle may be re-routed to another charging station which is not associated with any failure or maintenance. With the re-routing, vehicle does not need to first drive to the first charging station, detect that it is not possible to charge there, and then driving to the other charging station. Thus, the driving distance for the vehicle is reduced. The time to charging is reduced since the vehicle may be re-routed before it arrives at the first charging station.

According to a third aspect of the disclosure, a control system is provided. The control system comprises one or more control units configured to perform the method according to the second aspect.

Technical benefits of the third aspect are largely analogous to the technical benefits of the first aspect and the second aspect. Further, all examples of the first aspect and the second aspect are applicable to and combinable with all examples of the third aspect, and vice versa.

According to a fourth aspect of the disclosure, a charging station is provided. The charging station comprises a processor device to perform the method of the second aspect.

Technical benefits of the fourth aspect are largely analogous to the technical benefits of the first aspect, the second aspect and the third aspect. Further, all examples of the first aspect, the second aspect and the third aspect are applicable to and combinable with all examples of the fourth aspect, and vice versa.

According to a fifth aspect of the disclosure, a computer program product is provided. The computer program product comprises program code for performing, when executed by a processor device, the method of the second aspect.

Technical benefits of the fifth aspect are largely analogous to the technical benefits of the first aspect, the second aspect, the third aspect and the fourth aspect. Further, all examples of the first aspect, the second aspect, the third aspect and the fourth aspect are applicable to and combinable with all examples of the sixth aspect, and vice versa.

According to a sixth aspect of the disclosure, a non-transitory computer-readable storage medium is provided. The non-transitory computer-readable storage medium comprises instructions, which when executed by a processor device, cause the processor device to perform the method of the second aspect.

Technical benefits of the sixth aspect are largely analogous to the technical benefits of the first aspect, the second aspect, the third aspect, the fourth aspect and the fifth aspect. Further, all examples of the first aspect, the second aspect, the third aspect, the fourth aspect and the fifth aspect are applicable to and combinable with all examples of the sixth aspect, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary drawing illustrating a vehicle and a charging infrastructure network according to one example.
**FIG. 2** is an exemplary flow chart illustrating a method according to one example.

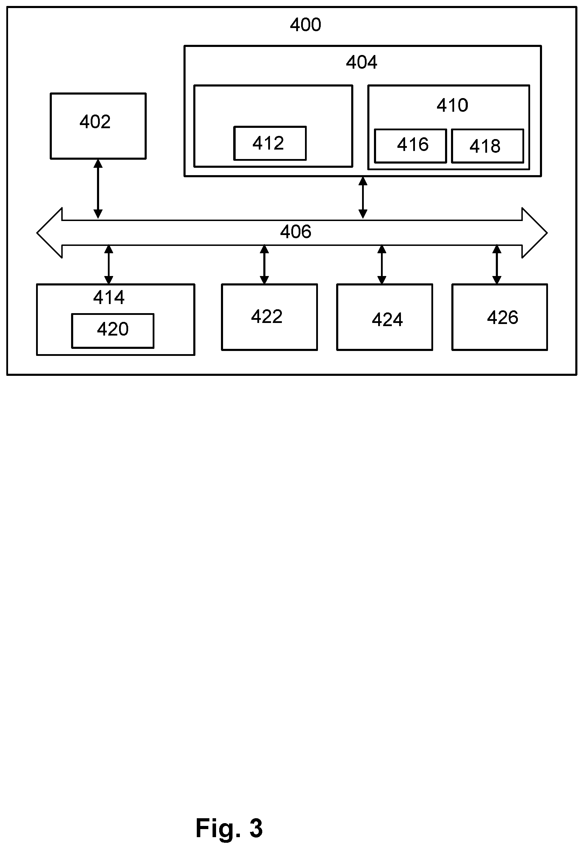

**FIG. 3** is a schematic diagram of an exemplary computer system for implementing examples disclosed herein, according to one example.

### DETAILED DESCRIPTION

Aspects set forth below represent the necessary information to enable those skilled in the art to practice the disclosure.

Charging is important for an at least partly electrical vehicle. It is important that the charging is performed as fast as possible, that it is performed safely, that the charging station functions properly, that maintenance is performed in time and correctly, that a potential failure is detected and corrected in due time, that the charging station has up-to-date software etc. Therefore, it is a strive to develop further improved technology relating to charging stations for vehicles.

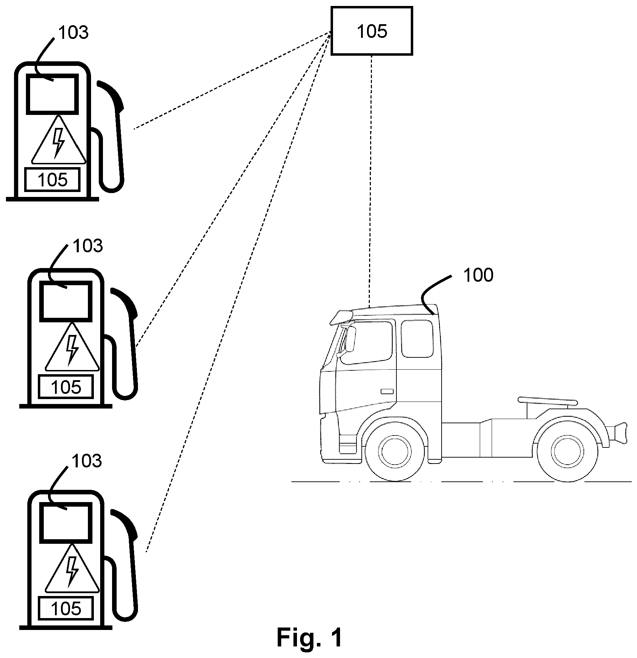

**FIG. 1** is an exemplary drawing illustrating a **vehicle 100** and a charging infrastructure network according to one example. The vehicle **100** may be an at least partly electrical heavy-duty vehicle, such as truck, bus, construction equipment, trailer, wheel loader, excavator, passenger car, marine vessel, working machine etc. The vehicle **100** may be a fully electrically operated vehicle as well as a hybrid vehicle, comprising also a combustion engine. The vehicle **100** may be at least partly driven by at least one fuel cell. The vehicle **100** may be a fully autonomous vehicle, an at least partly autonomous vehicle or a non-autonomous vehicle.

The vehicle **100** may be used by a user. The user may be a driver, an operator etc. of the vehicle 100. For example, if the vehicle **100** is an at least partly autonomous vehicle, then it may be operated or driven by a user. In another example, if the vehicle **100** is manually operated, i.e. a non-autonomous vehicle, then the vehicle **100** may be operated or driven by a driver. The user of the vehicle **100** may be located inside the vehicle **100** when operating it, or he/she may be remotely located from the vehicle **100.**

The vehicle **100** may be comprised in a vehicle fleet or fleet of vehicles. In other words, the vehicle **100** may be comprised in a group of vehicles, comprising a plurality of vehicles.

The charging infrastructure network comprises at least one charging station **103.** The term charging network may be used for the sake of simplicity herein when referring to the charging infrastructure network. In **FIG.1****,** the charging infrastructure network is exemplified to comprise three charging stations **103,** but any *n* number of charging stations **103** is applicable, where *n* is a positive integer. The at least one charging station **103** may be of any suitable type and arranged to charge the vehicle **100,** when they are connected to each other. In the example of three charging stations **103,** the charging stations **103** may be located at the same location or at different locations, e.g. one charging station **103** at a first location and two charging stations **103** at a second location, or one charging station **103** at a first location, a second charging station **103** at a second location and a third charging station **103** at a third location. Thus, a charging network may comprise charging stations **103** at the same or different locations.

Each charging station **103** may have a charging station configuration. The charging stations **103** in a charging network may comprise the same or different charging station configurations. The charging station configuration may describe or comprise the components, features, functions etc. of the charging station **103.** The components, features, functions of the charging station **103** may be, for example, computer software, sensors, data storage, gateways, grid connection etc. The components, features, functions may affect the performance of the charging station **103** in various degree.

The components may be added to the charging station **103** when it is being manufactured, after the charging station **103** has been in operation for a time period, after a number of charging operations etc. Thus, the components may be added to or mounted in the charging station **103** at different times. The components added to the charging station **103** after it has been in operation for some time, e.g., after a number of charging operations, may be referred to as add-on components or add-on features.

Below is a non-exhaustive list of add-on features that may be added to the charging station **103:**
- Telematic/network gateway, e.g. for external communication with e.g. the vehicle **100,** other charging stations **103,** a central station etc.
- Internal data storage system
- Data collection software
- Fault code generation and reading software for detecting for example:
   ∘ Wrong plug-in
   ∘ Plug-in ok
   ∘ System over-heating
   ∘ Power surge
   o Data Communication failure
   o Lack of power
   o Etc.
- Information collecting software arranged to collect information, for example information about:
   o Charging time.
   ∘ Low power.
   ∘ High power.
   ∘ Connection time to the vehicle **100.**
   ∘ Energy delivered by the vehicle **100.**
   ∘ Time of plug-in.
   ∘ Charging histogram.
   ∘ Load balancing request from the network.
   ∘ Load balancing request from another charging station 103 at the same site.
   ∘ Available input power histogram
   ∘ Charging start time
   ∘ Charging end-time
   ∘ Plug-in time
   o Unplugging time
   o Time to next maintenance
- Remote software download functionality
- Possibility to send specific software per vehicle type
- Charging scenario per vehicle type and/or charging station type
- Equipment mission download:
   o download the vehicle mission and required autonomy into the loading station **103** so that load charging balancing may be performed between multiple charging stations **103**
   o remote or local download

The charging station **103** may have a start configuration or default configuration from the start and when it is being dispatched from the charging station manufacturing facility. The start configuration may change during the lifetime of the charging station **103.** For example, a component may be exchanged by the same or similar component, for example a newer and improved version of the same component, a component may be exchanged by a different component, a completely new component may be added to the charging station **103** which provides the charging station **103** with a completely new feature etc. The charging station configuration may affect the performance of the charging station **103.** For example, adding a network gateway may enable external communication, e.g. with other charging stations or with a central unit, a memory storage with higher storage capacity enables storage of a larger amount of data etc. The charging station **103** may have a start configuration with a number of components, and where all or only some of the components are activated and others are deactivated. For example, the charging station **103** may comprise a computer software that is deactivated, i.e. switched off, in one configuration and that is activated, i.e. switched on, in another configuration.

A control system **105** may be comprised in the charging station **103** or the control system 105 may be a remote system or comprised in a remote system, e.g. a remote server. A first part of the control system **105** may be comprised in the charging station **103** and a second part of the control system **105** may be comprised in a remote server. The control system **105** may be arranged to communicate with the charging station **103** and/or the vehicle **100,** as indicated with the dotted lines in **FIG. 1****.** A remote server may be referred to as an offboard device. If the control system **105** is comprised in the charging station **103** it may be located at any suitable location in the charging station **103.** If the control system **105** is a remote server or comprised in a remote server, then the control system **105** is adapted to be connected to the charging station **103** via a communication link, e.g. wired or wirelessly, and the control system may also be connected to the vehicle **100.** The remote server may be located at any suitable distance from the charging station **103.** For example, the remote server may be in close proximity to the charging station **103,** it may be a cloud server etc. The control system **105** may be an electronic control unit comprising processing circuitry for performing the method described herein. The control system **105** may be a computer. The control system **105** may comprise hardware or hardware and software. The control system **105** may comprise a processor, memory, transmitter, receiver etc. The control system **105** may comprise a digital model of the charging station **103** in operation, or it may be adapted to obtain data generated from the digital model of the charging station **103** in operation. The control system **105** may comprise one or more control units, or the control system **105** may be a control unit. The control system **105** may comprise a processor device **402** of a computer system **400** (note that the reference numbers **400** and **402** are illustrated in FIG. 4).

Before describing the method for the charging infrastructure network for a vehicle 100, the term digital twin will be described in more detail. A digital twin may be referred to as a digital model, a device shadow etc. A digital twin is a digital representation of a physical or real object or process, i.e., the digital twin may be a digital representation or virtual replica of for example the actual charging station **103** in operation. A traditional computer simulation models what could have happened to the charging station **103,** while a digital twin models what is actually happening to the physical charging station **103** in the real world, i.e., the digital twin accurately reflects the physical charging station **103.** The digital twin of a device behaves identically to the physical device in the real world. A digital twin is far more accurate than a traditional simulation. A traditional computer simulation typically don't use real time data, while the digital twin uses real time data to perform the modelling. The digital twin may be configured based on historic data, i.e. historic real world data, from a plurality of charging stations **103,** e.g. a group of charging stations **103.** A Machine Learning (ML) algorithm may be used when configuring the digital twin based on historic real world data. The historic data may be referred to as training data used by the ML algorithm. An advantage of using the ML algorithm for configuring the digital twin may be that it is an efficient algorithm, its time consumption is low, and it provides outputs and results of high accuracy, i.e. accuracy above a threshold. The digital twin may represent an ideal charging station for example in terms of performance parameters such as charging speed, number of charging cycles before maintenance, temperature etc. The digital twin may be implemented in the control system **105,** or the control system **105** may be adapted to obtain data from another device on which the digital twin is implemented, e.g., a cloud device, a central device etc.

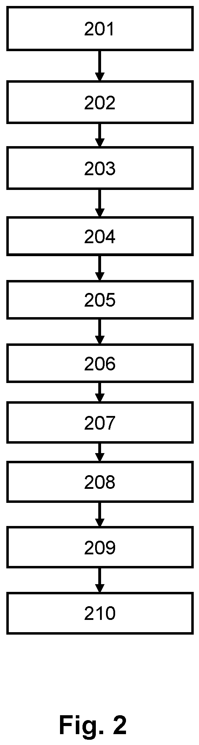

**FIG. 2** is a flow chart illustrating a method for a charging infrastructure network for a vehicle **100,** according to an example. The charging infrastructure network comprises at least one charging station **103.** Before the method is performed, it may be assumed that a dataset from a plurality of charging stations **103** has been created. The dataset may be a historic data set comprising real world data for a plurality of charging stations **103** previously obtained. The dataset may be obtainable from a data storage accessible by the control system **105,** the processor device **402,** the computer system **400** or any other unit which needs to access the dataset.

The method may be performed by the control system **105,** as mentioned above. The method may be performed by the processor device **402** of the computer system **400.** The control system **105** may be the processor device **402** or it may be comprised in the processor device **402.** The method is a computer-implemented method. The method comprises at least one of the following steps, which steps may be performed in any suitable order than described below.

Step **201:** Modelling, by a processor device **402** of the computer system **400,** an operating environment for the at least one charging station **103.** The operating environment is the environment in which the charging station **103** currently operates or may be expected to operate, e.g. a common environment, a typical environment etc. Modelling of the operating environment may result in parameters representing the operating environment, for example temperature, humidity, electrical network in the external surroundings of the charging station **103,** capacity of the power grid for connecting charging stations **103** etc. The modelling of the operating environment may represent a real-world charging scenario for the charging station **103.** One or more operating environments may be modelled, and they may be for example:
Operating environment 1: External temperature: 10°C, external humidity: 45%.
Operating environment 2: External temperature: 28°C, external humidity: 78%.
Operating environment 3: External temperature: -5°C, external humidity: 23%.

The above list may represent examples of operating environments that the charging station 103 may operate in, e.g. they may represent operating environments scenarios for the charging station **103.**

Modelling of the operating environment may be performed by using a digital twin for the operating environment, e.g. an operating environment digital twin. The operating environment may be modelled based on current real-time data and/or historic data from the charging station 103 and/or group of charging stations.

Modelling the operating environment may comprise to model a charging scenario for the charging station **103,** or modelling the operating environment may be the same as modelling a charging scenario for the charging station **103.** The charging scenario may be a current and real life charging station.

Step **201** may comprise to obtain data for at least one operating environment for at least one charging station **103.**

Step **202:** Modelling, by the processor device **402,** a current performance of the at least one charging station **103** and at the modelled operating environment. In other words, modelling a performance of the charging station **103** as-is in the operating environment and/or when executing the charging. The current performance refers to that the modelling is done with the current configuration of the charging station **103.**

Modelling the current performance may use operating data from the charging station **103,** i.e. historic real life operating data obtained from the charging station **103** and/or from a group of charging stations **103.** Modelling of the current performance of the charging station **103** may be performed by a digital twin for the current performance, e.g. a performance digital twin or a current performance digital twin. The modelling of the current performance may be done using the current charging station configuration.

Step **202** may comprise to obtain, by the processor device **402,** operating data from the charging station **103** in operation. The operating data is real world or real life data obtained during operation of the charging station **103.** Obtaining operating data is possible when the charging station **103** is connected, i.e. that it is connected to a communication system, e.g. a mobile communication system, a charging infrastructure communication system or other suitable system for communication.

For example, the current performance may be modelled for the following operating environments:
- Operating environment 1: External temperature: 10°C, external humidity: 45%.
- Operating environment 2: External temperature: 28°C, external humidity: 78%.
- Operating environment 3: External temperature: -5°C, external humidity: 23%.
A result of the modelling of the current performance may be for example:
- For operating environment 1: Average charging speed: 4 hours.
- For operating environment 2: Average charging speed: 3,5 hours.
- For operating environment 3: Average charging speed: 7 hours.

Step **203:** Modelling, by the processor device **402,** an expected performance of the at least one of the charging station **103** and at the modelled operating environment, and based on that the at least one charging station **103** is provided with one or more add-on features. In other words, there is a modelling of the expected performance of the charging station **103** if one or more add-on features would have been added to the charging station **103.** The add-on features are features that are comprised in the charging station **103,** but not activated, or the add-on features are features that are not currently comprised in the charging station 103 but that may be added to the charging station **103.** The modelling of the expected performance may be done using a future or possible charging station configuration which comprises the one or more add-on features.

Modelling of the expected performance of the charging station **103** may be performed by a digital twin for the expected performance, e.g. a performance digital twin or an expected performance digital twin. The digital twin may be comprised in, run by or on the processor device **402.**

A result of the modelling of the expected performance may be for example:
- For operating environment 1 and with add-on feature 1: Average charging speed: 3 hours
- For operating environment 2 and with add-on feature 1: Average charging speed: 3,1 hours
- For operating environment 3 and with add-on feature 1: Average charging speed: 6,5 hours.
Add-on feature 1 may be for example an updated computer software associated with charging speed of the charging station **103.**

Step **204:** Comparing, by the processor device **402,** the current performance with the expected performance for the at least one charging station **103.** The result of the comparison may be that the expected performance is below, at or above the current performance.

Step **205:** Comparing, by the processor device **402,** the current performance for a first charging station **103** with the current performance of at least one second charging station **103.** In other words, the current performance of at least two different charging stations **103** may be compared. Step **205** may be an optional step.

Step **205** may comprise to obtain, by the processor device **402,** operating data from the first and the second charging station **103** when they are in operation. The operating data is real world or real life data obtained during operation of the first and second charging station **103.** Obtaining operating data is possible when the first and second charging stations **103** are connected, i.e. that they are connected to a communication system, e.g. a mobile communication system, a charging infrastructure communication system or other suitable system for communication.

Step **206:** Based on a result of the comparison, determining, by the processor device **402,** whether enabling the one or more add-on features improves a performance of the at least one charging station **103** or not. It may be the comparison in step **204** that is the basis for the determining in step **206,** or the comparison in step **205** or both the comparisons in step **204** and **205.**

Using the example above, it may be determined that the average charging speed will decrease if add-on feature 1 is enabled or provided to the charging station **103.**

The performance of the charging station 103 may be improved in different ways, for example the speed of charging, the lifetime of the charging station, a number of charging cycles, the optimal vehicle to be charged at the charging station **103,** an optimal charging cycle based on the equipment mission and configuration, optimal charging power to request to the energy network, etc.

The performance may be determined to be improved when the result of the comparison indicates that the expected performance exceeds the current performance. In other words, there may be an improved performance of the charging station **103** by enabling the one or more add-on features, as compared to without the add-on features.

The performance may be determined to not be improved when the result of the comparison indicates that the expected performance does not exceed or is the same as the current performance. In other words, there may not be any improved performance of the charging station **103** by enabling the one or more add-on features, as compared to without the add-on features.

Step **207:** When a result of the comparison in step **205** indicates that the current performance of the first charging station **103** is lower than the current performance of the at least one second charging station **103,** determining, by the processor device **402,** that the result is an indication of a failure or a need for maintenance of the first charging station **103.** Step **207** may be an optional step.

When the current performance of at least two charging stations **103** are compared, then the result may indicate a difference in current performance between the charging stations 103. Information about the difference in current performance may be used to prioritize or provide an advice about which charging station **103** the vehicle **100** should travel to for charging, for example the charging station **103** which has highest charging speed, that has a computer software of a version that is compatible with a computer software in the vehicle **100** etc. Information about the difference in current performance between the charging station **103** may be provided to a central unit which decides which charging station to route the vehicle **100,** it may be provided on a display for a user of the vehicle etc.

Step **208:** When the performance is determined in step **206** to be improved, triggering, by the processor device **402,** an update procedure of the at least one charging station **103** and additionally optionally providing update information relating to the update procedure of the at least one charging station **103.** The update procedure may be associated with the one or more add-on features. Step **208** may be an optional step.

Step **209:** Providing, by the processor device **402,** information about the indication of the failure or the need for maintenance to a central unit associated with the charging infrastructure network. Step **209** may be an optional step. The central unit may be associated with the operator or owner of the charging station **103** and/or the charging infrastructure network.

Step **210:** Initiating, by the processor device **402,** re-routing of a vehicle **100** currently scheduled to charge at the first charging station to another charging station. Step **210** may be an optional step. Initiating re-routing of the vehicle **100** may comprise to determine a new route for the vehicle, to provide information to the vehicle **100** about the re-routing, e.g. information about the new route and information about the other charging station, e.g. its navigation coordinates. Consequently, the vehicle **100** may, automatically or based on input from the vehicle's user, change its route so that it travels towards the other charging station. The initiating of re-routing may be performed when a result of the comparison indicates that the current performance of the first charging station **103** is lower than the current performance of the at least one second charging station **103.**

Determining the new route for the vehicle **100** to take to the other charging station may be based on vehicle configuration data, vehicle log data, weather data, map, traffic data etc.

The method in **FIG. 2** may be performed for charging of a vehicle **100** in general, or it may be performed for charging of a particular vehicle **100.** If the method is performed for a particular vehicle **100,** then the vehicle configuration of the vehicle **100** may be taken into account. For example, a computer software related to receiving electrical energy at the vehicle 100 may be influenced by the computer software related to transmission of electrical energy at the charging station **103.** For example, if the charging station **103** comprises a computer software of an older version compared to the computer software comprised in the vehicle **100,** then this may affect the performance of the charging station **103** in that it may not be able to provide a charging speed which is optimal with respect to the receiving capacity of the vehicle **100.** The vehicle **100** can receive higher charging speed than the charging station **103** is able to send. Thus, enabling of an add-on feature in the charging station **103** may improve the performance.

As mentioned above, there may be multiple digital twins. There may be an operating environment digital twin, a current performance digital twin and an expected performance digital twin, and together they may form a digital twin system. The current performance digital twin and the expected performance digital twin may be a charging station digital twin. In other words, the charging station digital twin may be used to model the current and/or expected performance of the charging station **103.** The digital twin system comprises multiple digital twins, such as the operating environment digital twin, the current performance digital twin and the expected performance digital twin. The digital twin system may comprise additional digital twins, such as vehicle digital twin used for modelling the vehicle **100** to be charged by the charging station **103.** The digital twin system may comprise a charging infrastructure network digital twin used for modelling the charging infrastructure network, i.e. a network comprising multiple charging stations **103.**

The digital twin system may be arranged to model a charging infrastructure network, a charging station, it may utilize environmental data, configuration and mission of the vehicle population to be charged.

The digital twin system is arranged to model a common operating environment and/or charging scenario for each charging station **103** in the charging infrastructure network. The digital twin system is configured to model a performance of the charging station **103** as-is in the common operating environment and/or in executing the charging. The digital twin system is also configured to model the expected performance of the charging station **103** with one or more optional add-on features enabled in the common operating environment, and if the performance is improved by enabling the one or more optional add-on features. An update procedure is triggered. Information comprising a suggestion for update of the charging station **103** may be provided for example to an owner or operator of the charging station **103** in order to help in optimizing his charging requirements and energy cost.

A computer system **400** comprises a processor device **402** configured to:
- model an operating environment for at least one charging station **103,** wherein the at least one charging station **103** is comprised in a charging infrastructure network for a vehicle **100;**
- model a current performance of the at least one charging station **103** and at the modelled operating environment;
- model an expected performance of the at least one charging station **103** and at the modelled operating environment and based on that the at least one charging station **103** is provided with one or more add-on features;
- compare the current performance with the expected performance for the at least one charging station **103;** and to
- based on a result of the comparison, determine whether enabling the one or more add-on features improves a performance of the at least one charging station **103** or not.

A computer system **400** comprises the processor device **402** configured to perform the method described herein, e.g. as illustrated in **FIG.2****.**

A control system **105** comprises one or more control units configured to perform the method describe herein, e.g. as illustrated in **FIG.2****.**

A charging station **103** comprising a processor device **402** to perform the method described herein, e.g. as illustrated in **FIG.2****.**

A computer program product comprises program code for performing, when executed by a processor device **402,** the method described herein, e.g. as illustrated in **FIG.2****.**

A non-transitory computer-readable storage medium comprising instructions, which when executed by a processor device, cause the processor device **402** to perform the method described herein, e.g. as illustrated in **FIG.2****.**

FIG. 4 is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system, e.g. the control system **105** exemplified in **FIG. 1****,** may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include a processor device **402** (may also be referred to as a control unit), a memory **404,** and a system bus **406.** The computer system **400** may include at least one computing device having the processor device **402.** The system bus **406** provides an interface for system components including, but not limited to, the memory **404** and the processor device **402.** The processor device **402** may include any number of hardware components for conducting data or signal processing or for executing computer code stored in memory **404.** The processor device **402** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processor device **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with a processor device **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program product **420** stored on a transitory or non-transitory computer-usable or computer-readable storage medium (e.g., single medium or multiple media), such as the storage device **414,** which includes complex programming instructions (e.g., complex computer-readable program code) to cause the processor device **402** to carry out the steps described herein. Thus, the computer-readable program code can comprise software instructions for implementing the functionality of the examples described herein when executed by the processor device **402.** The processor device **402** may serve as a controller or control system **105** for the computer system **400** that is to implement the functionality described herein.

The computer system **400** also may include an input device interface **422** (e.g., input device interface and/or output device interface). The input device interface **422** may be configured to receive input and selections to be communicated to the computer system **400** when executing instructions, such as from a keyboard, mouse, touch-sensitive surface, etc. Such input devices may be connected to the processor device **402** through the input device interface **422** coupled to the system bus **406** but can be connected through other interfaces such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may also include a communications interface **426** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Summarized, the present disclosure relates to a digital twin system which is currently being used in several technological areas. The charging infrastructure digital twin is a virtual representation or model of physical charging infrastructure, which can be used for various purposes such as determining an expected energy charging requirement for a given scenario, predicting a maintenance need or even monitor the charging station.

The digital twin system may comprise a model of the charging infrastructure and also of the environment in which the charging station 103 is operating, e.g., common charging speed, number of charging cycles, surrounding electrical network, external temperature. Based on the charging operating conditions, the digital twin system may evaluate the performance of a charging station 103 based on others charging station performance. If a problem or an improvement is detected for the charging station 103, the owner or operator of the charging station 103 is informed to take immediate action. In case of potential failure, vehicles 100 planned to recharge on the detected charging station 103 may be informed and rerouted to a back-up charging station. A decision may be taken to optimize the energy requirements or to re-route the vehicle 100.

The present disclosure enables to predict energy requirements, charging speed and charging station reliability in order to deliver a high performing charging infrastructure and to adapt the charging capacity to optimize the energy cost. The present disclosure also enables to scale-up the charging infrastructure network monitoring by using big data and Machine learning technologies.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (400) comprising a processor device (402) configured to:
model an operating environment for at least one charging station (103), wherein the at least one charging station (103) is comprised in a charging infrastructure network for a vehicle (100);
model a current performance of the at least one charging station (103) and at the modelled operating environment;
model an expected performance of the at least one charging station (103) and at the modelled operating environment,
**characterized in that**
the processor device is configured to model the expected performance based on that the at least one charging station (103) is provided with one or more add-on features, wherein the one or more add-on features are features that are comprised in the charging station (103), but not activated, or the one or more add-on features are features that are not currently comprised in the charging station (103) but that may be added to the charging station (103);
wherein the processor device (402) is further configured to:
compare the current performance with the expected performance for the at least one charging station (103);
based on a result of the comparison, determine whether enabling the one or more add-on features improves a performance of the at least one charging station (103) or not;
when the performance is determined to be improved, determine an update procedure of the at least one charging station (103), wherein the update procedure is associated with the one or more add-on features; and to
when the performance is determined to be improved, trigger the update procedure of the at least one charging station (103), wherein the update procedure is associated with the one or more add-on features.

2. A computer-implemented method for a charging infrastructure network for a vehicle (100), the charging infrastructure network comprises at least one charging station (103),
the method comprising:
*modelling* (201), by a processor device (402) of a computer system (400), an operating environment for the at least one charging station (103);
*modelling* (202), by the processor device (402), a current performance of the at least one charging station (103) and at the modelled operating environment;
*modelling* (203), by the processor device (402), an expected performance of the at least one of the charging station (103) and at the modelled operating environment,
**characterized in that**
the expected performance is modelled based on that the at least one charging station (103) is provided with one or more add-on features, wherein the one or more add-on features are features that are comprised in the charging station (103), but not activated, or the one or more add-on features are features that are not currently comprised in the charging station (103) but that may be added to the charging station (103);
wherein the method further comprises:
*comparing* (204), by the processor device (402), the current performance with the expected performance for the at least one charging station (103);
based on a result of the comparison, *determining* (206), by the processor device (402), whether enabling the one or more add-on features improves a performance of the at least one charging station (103) or not; and
when the performance is determined to be improved, *triggering* (208), by the processor device (402), an update procedure of the at least one charging station (103), wherein the update procedure is associated with the one or more add-on features.

3. The method according to claim 2, comprising:
when the performance is determined to be improved, *providing* (208), by the processor device (402), update information relating to the update procedure of the at least one charging station (103).

4. The method according to any of claims 2-3, wherein the performance is determined to be improved when the result of the comparison indicates that the expected performance exceeds the current performance.

5. The method according to any of claims 2-4, wherein the performance is determined to not be improved when the result of the comparison indicates that the expected performance does not exceed or is the same as the current performance.

6. The method according to any of claims 2-5, comprising:
*comparing* (205), by the processor device (402), the current performance for a first charging station (103) with the current performance of at least one second charging station (103); and
when a result of the comparison indicates that the current performance of the first charging station (103) is lower than the current performance of the at least one second charging station (103), *determining* (207), by the processor device (402), that the result is an indication of a failure or a need for maintenance of the first charging station (103).

7. The method according to claim 6, comprising:
*providing* (209), by the processor device (402), information about the indication of the failure or the need for maintenance to a central unit associated with the charging infrastructure network.

8. The method according to any of claims 6-7, comprising:
*initiating* (210), by the processor device (402), re-routing of a vehicle (100) currently scheduled to charge at the first charging station to another charging station.

9. A control system (105) comprising one or more control units configured to perform the method according to any of claims 2-8.

10. A charging station (103) comprising a processor device (402) to perform the method of any of claims 2-8.

11. A computer program product comprising program code for performing, when executed by a processor device (402), the method of any of claims 2-8.

12. A non-transitory computer-readable storage medium comprising instructions, which when executed by a processor device (402), cause the processor device (402) to perform the method of any of claims 2-8.

## Patentansprüche

1. Computersystem (400), umfassend eine Prozessorvorrichtung (402), die konfiguriert ist zum:
Modellieren einer Betriebsumgebung für mindestens eine Ladestation (103), wobei die mindestens eine Ladestation (103) in einem Ladeinfrastrukturnetzwerk für ein Fahrzeug (100) umfasst ist;
Modellieren einer aktuellen Leistungsfähigkeit der mindestens einen Ladestation (103) und an der modellierten Betriebsumgebung;
Modellieren einer erwarteten Leistungsfähigkeit der mindestens einen Ladestation (103) und an der modellierten Betriebsumgebung,
**dadurch gekennzeichnet, dass**
die Prozessorvorrichtung konfiguriert ist, um die erwartete Leistungsfähigkeit darauf basierend zu modellieren, dass die mindestens eine Ladestation(103) mit einem oder mehreren Zusatzmerkmalen versehen wird, wobei das eine oder die mehreren Zusatzmerkmale Merkmale sind, die in der Ladestation (103) umfasst sind, aber nicht aktiviert sind, oder das eine oder die mehreren Zusatzmerkmale Merkmale sind, die aktuell nicht in der Ladestation (103) umfasst sind, die aber der Ladestation (103) hinzugefügt werden können;
wobei die Prozessorvorrichtung (402) ferner konfiguriert ist zum:
Vergleichen der aktuellen Leistungsfähigkeit mit der erwarteten Leistungsfähigkeit für die mindestens eine Ladestation (103);
basierend auf einem Ergebnis des Vergleichs, Bestimmen, ob das Aktivieren des einen oder der mehreren Zusatzmerkmale eine Leistungsfähigkeit der mindestens einen Ladestation (103) verbessert oder nicht;
wenn bestimmt wird, dass die Leistungsfähigkeit sich verbessert hat, Bestimmen eines Aktualisierungsvorgangs der mindestens einen Ladestation (103), wobei der Aktualisierungsvorgang mit dem einen oder den mehreren Zusatzmerkmalen verknüpft ist; und zum
wenn bestimmt wird, dass die Leistungsfähigkeit sich verbessert hat, Auslösen eines Aktualisierungsvorgangs der mindestens einen Ladestation (103), wobei der Aktualisierungsvorgang mit dem einen oder den mehreren Zusatzmerkmalen verknüpft ist.

2. Computerimplementiertes Verfahren für ein Ladeinfrastrukturnetzwerk für ein Fahrzeug (100), wobei das Ladeinfrastrukturnetzwerk mindestens eine Ladestation (103) umfasst, das Verfahren umfassend:
*Modellieren* (201), durch eine Prozessorvorrichtung (402) eines Computersystems (400), einer Betriebsumgebung für die mindestens eine Ladestation (103);
*Modellieren* (202), durch die Prozessorvorrichtung (402), einer aktuellen Leistungsfähigkeit der mindestens einen Ladestation (103) und an der modellierten Betriebsumgebung;
*Modellieren* (203), durch die Prozessorvorrichtung (402), einer erwarteten Leistungsfähigkeit der mindestens einen der Ladestation (103) und an der modellierten Betriebsumgebung, **dadurch gekennzeichnet, dass**
die erwartete Leistungsfähigkeit basierend darauf modelliert wird, dass die mindestens eine Ladestation (103) mit einem oder mehreren Zusatzmerkmalen versehen wird, wobei in das eine oder die mehreren Zusatzmerkmale Merkmale sind, die in der Ladestation (103) umfasst sind, aber nicht aktiviert sind, oder das eine oder die mehreren Zusatzmerkmale Merkmale sind, die derzeit nicht in der Ladestation (103) umfasst sind, die aber der Ladestation (103) hinzugefügt werden können;
wobei das Verfahren ferner umfasst:
*Vergleichen* (204), durch die Prozessorvorrichtung (402), der aktuellen Leistungsfähigkeit mit der erwarteten Leistungsfähigkeit für die mindestens eine Ladestation (103);
basierend auf einem Ergebnis des Vergleichs, *Bestimmen* (206), durch die Prozessorvorrichtung (402), ob das Aktivieren des einen oder der mehreren Zusatzmerkmale eine Leistungsfähigkeit der mindestens einen Ladestation (103) verbessert oder nicht; und
wenn bestimmt wird, dass die Leistungsfähigkeit sich verbessert hat, *Auslösen* (208), durch die Prozessorvorrichtung (402), eines Aktualisierungsvorgangs der mindestens einen Ladestation (103), wobei der Aktualisierungsvorgang mit dem einen oder den mehreren Zusatzmerkmalen verknüpft ist.

3. Verfahren nach Anspruch 2, umfassend:
wenn bestimmt wird, dass die Leistungsfähigkeit sich verbessert hat, *Bereitstellen* (208), durch die Prozessorvorrichtung (402), von Aktualisierungsinformationen in Bezug auf den Aktualisierungsvorgang der mindestens einen Ladestation (103).

4. Verfahren nach einem der Ansprüche 2 bis 3, wobei bestimmt wird, dass die Leistungsfähigkeit sich verbessert hat, wenn das Ergebnis des Vergleichs angibt, dass die erwartete Leistungsfähigkeit die aktuelle Leistungsfähigkeit übersteigt.

5. Verfahren nach einem der Ansprüche 2 bis 4, wobei bestimmt wird, dass die Leistungsfähigkeit sich nicht verbessert hat, wenn das Ergebnis des Vergleichs angibt, dass die erwartete Leistungsfähigkeit die aktuelle Leistungsfähigkeit nicht übersteigt oder gleich der aktuellen Leistungsfähigkeit ist.

6. Verfahren nach einem der Ansprüche 2 bis 5, umfassend:
*Vergleichen* (205), durch die Prozessorvorrichtung (402), der aktuellen Leistungsfähigkeit für eine erste Ladestation (103) mit der aktuellen Leistungsfähigkeit mindestens einer zweiten Ladestation (103); und
wenn ein Ergebnis des Vergleichs angibt, dass die aktuelle Leistungsfähigkeit der ersten Ladestation (103) geringer ist als die aktuelle Leistungsfähigkeit der mindestens einen zweiten Ladestation (103), *Bestimmen* (207), durch die Prozessorvorrichtung (402), dass das Ergebnis ein Hinweis auf einen Ausfall oder einen Wartungsbedarf der ersten Ladestation (103) ist.

7. Verfahren nach Anspruch 6, umfassend:
*Bereitstellen* (209), durch die Prozessorvorrichtung (402), von Informationen bezüglich des Hinweises auf den Ausfall oder den Wartungsbedarf an eine zentrale Einheit, die mit dem Ladeinfrastrukturnetzwerk verknüpft ist.

8. Verfahren nach einem der Ansprüche 6 bis 7, umfassend:
*Initiieren* (210), durch die Prozessorvorrichtung (402), eines Umleitens eines Fahrzeugs (100), das aktuell zum Laden an der ersten Ladestation eingeplant ist, zu einer anderen Ladestation.

9. Steuersystem (105), umfassend eine oder mehrere Steuereinheiten, die konfiguriert sind, um das Verfahren nach einem der Ansprüche 2 bis 8 durchzuführen.

10. Ladestation (103), umfassend eine Prozessorvorrichtung (402), um das Verfahren nach einem der Ansprüche 2 bis 8 durchzuführen.

11. Computerprogrammprodukt, umfassend Programmcode zum Durchführen, wenn er durch eine Prozessorvorrichtung (402) ausgeführt wird, des Verfahrens nach einem der Ansprüche 2 bis 8.

12. Nichtflüchtiges, computerlesbares Speichermedium, umfassend Anweisungen, die, wenn sie durch eine Prozessorvorrichtung (402) ausgeführt werden, die Prozessorvorrichtung (402) veranlassen, das Verfahren nach einem der Ansprüche 2 bis 8 durchzuführen.

## Revendications

1. Système informatique (400) comprenant un dispositif processeur (402) configuré pour :
modéliser un environnement de fonctionnement pour au moins une station de charge (103), dans lequel l'au moins une station de charge (103) est comprise dans un réseau d'infrastructure de charge pour un véhicule (100) ;
modéliser une performance actuelle de l'au moins une station de charge (103) et au niveau de l'environnement de fonctionnement modélisé ;
modéliser une performance attendue de l'au moins une station de charge (103) et au niveau de l'environnement de fonctionnement modélisé,
**caractérisé en ce que**
le dispositif processeur est configuré pour modéliser les performances attendues sur la base du fait que l'au moins une station de charge (103) est dotée d'une ou plusieurs caractéristiques d'ajout, dans lequel la ou les caractéristiques d'ajout sont des caractéristiques qui sont comprises dans la station de charge (103), mais non activées, ou la ou les caractéristiques d'ajout sont des caractéristiques qui ne sont pas actuellement comprises dans la station de charge (103) mais qui peuvent être ajoutées à la station de charge (103) ;
dans lequel le dispositif processeur (402) est en outre configuré pour :
comparer la performance actuelle avec la performance attendue pour l'au moins une station de charge (103) ;
sur la base d'un résultat de la comparaison, déterminer si l'activation de la ou des caractéristiques d'ajout améliore une performance de l'au moins une station de charge (103) ou non ;
lorsque la performance est déterminée comme étant améliorée, déterminer une procédure de mise à jour de l'au moins une station de charge (103), dans lequel la procédure de mise à jour est associée à la ou aux caractéristiques d'ajout ; et
lorsque la performance est déterminée comme étant améliorée, déclencher la procédure de mise à jour de l'au moins une station de charge (103), dans lequel la procédure de mise à jour est associée à la ou aux caractéristiques d'ajout.

2. Procédé mis en œuvre par ordinateur pour un réseau d'infrastructure de charge pour un véhicule (100), le réseau d'infrastructure de charge comprend au moins une station de charge (103), le procédé comprenant :
*la modélisation* (201), par un dispositif processeur (402) d'un système informatique (400), d'un environnement de fonctionnement pour l'au moins une station de charge (103) ;
*la modélisation* (202), par le dispositif processeur (402), d'une performance actuelle de l'au moins une station de charge (103) et au niveau de l'environnement de fonctionnement modélisé ;
*la modélisation* (203), par le dispositif processeur (402), d'une performance attendue de l'au moins une station de charge (103) et au niveau de l'environnement de fonctionnement modélisé, **caractérisé en ce que**
la performance attendue est modélisée sur la base du fait que l'au moins une station de charge (103) est dotée d'une ou plusieurs caractéristiques d'ajout, dans lequel la ou les caractéristiques d'ajout sont des caractéristiques qui sont comprises dans la station de charge (103), mais non activées, ou la ou les caractéristiques d'ajout sont des caractéristiques qui ne sont pas actuellement comprises dans la station de charge (103) mais qui peuvent être ajoutées à la station de charge (103) ;
dans lequel le procédé comprend en outre :
*la comparaison* (204), par le dispositif processeur (402), de la performance actuelle avec la performance attendue pour l'au moins une station de charge (103) ;
sur la base d'un résultat de la comparaison, *le fait de déterminer* (206), par le dispositif processeur (402), si l'activation de la ou des caractéristiques d'ajout améliore une performance de l'au moins une station de charge (103) ou non ; et
lorsqu'il est déterminé que la performance est améliorée, *le déclenchement* (208), par le dispositif processeur (402), d'une procédure de mise à jour de l'au moins une station de charge (103), dans lequel la procédure de mise à jour est associée à la ou aux caractéristiques d'ajout.

3. Procédé selon la revendication 2, comprenant :
lorsqu'il est déterminé que la performance est améliorée, *la fourniture* (208), par le dispositif processeur (402), d'informations de mise à jour relatives à la procédure de mise à jour de l'au moins une station de charge (103).

4. Procédé selon l'une quelconque des revendications 2 à 3, dans lequel la performance est déterminée comme étant améliorée lorsque le résultat de la comparaison indique que la performance attendue dépasse la performance actuelle.

5. Procédé selon l'une quelconque des revendications 2 à 4, dans lequel il est déterminé que la performance n'est pas améliorée lorsque le résultat de la comparaison indique que la performance attendue ne dépasse pas ou est identique à la performance actuelle.

6. Procédé selon l'une quelconque des revendications 2 à 5, comprenant :
*la comparaison* (205), par le dispositif processeur (402), de la performance actuelle pour une première station de charge (103) avec la performance actuelle d'au moins une seconde station de charge (103) ; et
lorsqu'un résultat de la comparaison indique que la performance actuelle de la première station de charge (103) est inférieure à la performance actuelle de l'au moins une seconde station de charge (103), *le fait de déterminer* (207), par le dispositif processeur (402), que le résultat est une indication d'une défaillance ou d'un besoin de maintenance de la première station de charge (103).

7. Procédé selon la revendication 6, comprenant :
*la fourniture* (209), par le dispositif processeur (402), d'informations concernant l'indication de la défaillance ou du besoin de maintenance à une unité centrale associée au réseau d'infrastructure de charge.

8. Procédé selon l'une quelconque des revendications 6 à 7, comprenant :
*l'initiation* (210), par le dispositif processeur (402), du réacheminement d'un véhicule (100) actuellement programmé pour se recharger à la première station de charge vers une autre station de charge.

9. Système de commande (105) comprenant une ou plusieurs unités de commande configurées pour réaliser le procédé selon l'une quelconque des revendications 2 à 8.

10. Station de charge (103) comprenant un dispositif processeur (402) pour réaliser le procédé selon l'une quelconque des revendications 2 à 8.

11. Produit-programme d'ordinateur comprenant un code de programme permettant de réaliser, lorsqu'il est exécuté par un dispositif processeur (402), le procédé selon l'une quelconque des revendications 2 à 8.

12. Support de stockage non transitoire lisible par ordinateur comprenant des instructions qui, lorsqu'elles sont exécutées par un dispositif processeur (402), amènent le dispositif processeur (402) à réaliser le procédé selon l'une quelconque des revendications 2 à 8.
